# EUROPEAN PATENT APPLICATION

(11) **EP 3 306 547 A1**
(43) Date of publication of application: **11.04.2018**
(21) Application number: 17202903.5
(22) Date of filing: 08.04.2011
(51) Int. Cl.: G06Q 20/32, G06Q 20/20

(54) **PAYMENT PROCESSING SYSTEM INCLUDING MOBILE WIRELESS COMMUNICATIONS DEVICE TO SEND A PAYMENT CONFIRMATION TO A TRANSACTION TERMINAL AND ASSOCIATED METHODS**

(62) Divisional of application: 11161682.7
(71) Applicant: BlackBerry Limited, Waterloo, ON N2K 0A7 (CA)
(72) Inventor: GRIFFIN, Jason Tyler, Waterloo, Ontario N2L 3W8 (CA); LITTLE, Herbert Anthony, Waterloo, Ontario N2L 3W8 (CA)
(74) Representative: Coates, Robert James Patterson

(57) **Abstract**

A payment processing system **10** includes a transaction terminal **12** having a merchant account associated therewith and including a first wireless device. The payment processing system **10** also includes a payment server **18,** and a mobile wireless communications device **24** having a purchaser account associated therewith and including a second wireless device **26** and a processor **31** coupled thereto and configured to send transaction information to the payment server **18.** The payment server **18** is configured to cause a transfer of funds from the purchaser account to the merchant account based upon the transaction information, and to send payment confirmation to the mobile wireless communications device **24** based upon the transfer of funds. The processor **31** is configured to send the payment confirmation to the transaction terminal **12** via the first and second wireless devices **15, 26.**

## Description

### Technical Field

The present disclosure relates to the field of mobile wireless communications devices, and, more particularly, to mobile wireless communications devices for communicating with payment processing systems.

### Background

Mobile wireless communications devices have become pervasive in today's society, and are carried daily by a large number of individuals. Part of the reason for their popularity is that such mobile wireless communications devices are now capable of more than simple voice communications. Indeed, some mobile wireless communications devices are now capable of acting as a personal digital assistant, performing functions such as keeping a calendar of daily appointments and maintaining a large address book. In addition, some mobile wireless communications devices have connectivity with the Internet via their cellular connection, and are thus capable of e-mail delivery and web browsing.

In addition to carrying a mobile wireless communications device, many individuals also carry a wallet containing numerous cards, such as driver's licenses, credit cards, bank cards, discount cards, rewards cards, and membership cards. This wide variety of cards can lead to a wallet being undesirably thick, taking up more space than desired in a pocket or a purse. One way in which to reduce this burden is to design mobile wireless communications devices that can carry the information contained in such cards (such as account access information), and payment processing systems that can access the information in those mobile wireless communications devices in order to process transactions.

While such mobile wireless communications devices have been successful at reducing the number of cards an individual carries, existing payment processing systems often utilize a point of sale device or transaction terminal with that has connectivity with a payment processing server or clearing house. This leaves a need for new payment processing systems that can operate when the point of sale device or transaction terminal does not have connectivity with the payment processing server or clearing house.

### Brief Description of the Drawings

FIG. 1 is a schematic block diagram of an embodiment of a payment processing system, in accordance with the present disclosure.
FIG. 2 is a schematic block diagram of an embodiment of a payment processing system where a transaction terminal has an NFC tag associated therewith, in accordance with the present disclosure.
FIG. 3 is a schematic block diagram of an embodiment of a payment processing system where a transaction terminal has a substrate displaying a coded image associated therewith, in accordance with the present disclosure.
FIG. 4 is a schematic block diagram of an embodiment of a payment processing system where a transaction terminal has a display displaying a coded image thereon, in accordance with the present disclosure.
FIG. 5 is a schematic block diagram of an embodiment of a payment processing system including first and second Bluetooth devices, in accordance with the present disclosure.
FIG. 6 is a schematic block diagram of an embodiment of a payment processing system including first and second NFC devices, and first and second Bluetooth devices, in accordance with the present disclosure.
FIG. 7 is a flowchart of a method of operating the payment processing system of FIG. 1.
FIG. 8 is a schematic block diagram illustrating example components of a mobile wireless communications device that may be used with the payment processing systems of FIGS. 1, 2, 3, 4, 5 and 6.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a payment processing system may include a transaction terminal having a merchant account associated therewith and comprising a first wireless device, a payment server, and a mobile wireless communications device. The mobile wireless communications device may have a purchaser account associated therewith and may comprise a second wireless device and a processor coupled thereto and configured to send transaction information to the payment server. The payment server may be configured to cause a transfer of funds from the purchaser account to the merchant account based upon the transaction information, and to send payment confirmation to the mobile wireless communications device based upon the transfer of funds. The processor may be configured to send the payment confirmation to the transaction terminal via the first and second wireless devices.

This payment processing advantageously allows functioning when the transaction terminal does not have a network connection with the payment server, for example, and instead uses the mobile wireless communications device to facilitate communications with the payment server. This may be particularly useful for use with vending machines, or mobile food vendors, such as catering trucks and hot dog stands.

In some applications, the first and second wireless devices may be first and second near field communications (NFC) devices. The first and second wireless devices may also include, or be, first and second Bluetooth devices, as will be appreciated by those skilled in the art. The transaction terminal may be configured to send the transaction information to the mobile wireless communications device. Indeed, the transaction terminal may be configured to send the transaction information to the mobile wireless communications device via the first and second NFC devices. Additionally or alternatively, the transaction terminal may be configured to send the transaction information to the mobile wireless communications device via the first and second Bluetooth devices and based upon proximity between the first and second NFC devices. Similarly, the mobile wireless communications device may be configured to send the payment confirmation to the transaction terminal via the first and second NFC devices, or via the first and second Bluetooth devices and based upon proximity between the first and second NFC devices.

Additionally or alternatively, the transaction terminal may include a display configured to display the transaction information, and the mobile wireless communications device may have a camera to capture the transaction information on the display. Here, the display may be configured to display the transaction information as a coded image. The coded image may be a barcode, two-dimensional barcode, or QR code, for example.

Similarly, at least one substrate having an image thereon may be positioned adjacent the transaction terminal, and the mobile wireless communications device may have a camera to capture the image. The processor may then be configured to generate the transaction information based upon the captured image. In addition, the image on the at least one substrate may be a coded image.

Likewise, at least one NFC tag having data stored thereon may be positioned adjacent the transaction terminal, and the processor may be configured to cooperate with the second NFC device and to generate the transaction information based upon the stored data. Also, the transaction terminal may include a display and may be configured to present the payment confirmation on the display.

A method aspect is directed to a method of operating a payment processing system comprising a transaction terminal having a merchant account associated therewith and comprising a first near field communications (NFC) device, a payment server, and a mobile wireless communications device comprising a second NFC device and having a purchaser account associated therewith. The method may comprise sending transaction information to the payment server via cooperation between the first and second NFC devices, using a processor of the mobile wireless communications device. The method may also include causing a transfer of funds from the purchaser account to the merchant account based upon the transaction information, and sending payment confirmation to the mobile wireless communications device based upon the transfer of funds, using the payment server. The method may further include sending the payment confirmation to the transaction terminal via cooperation between the first and second NFC devices, using the processor of the mobile wireless communications device.

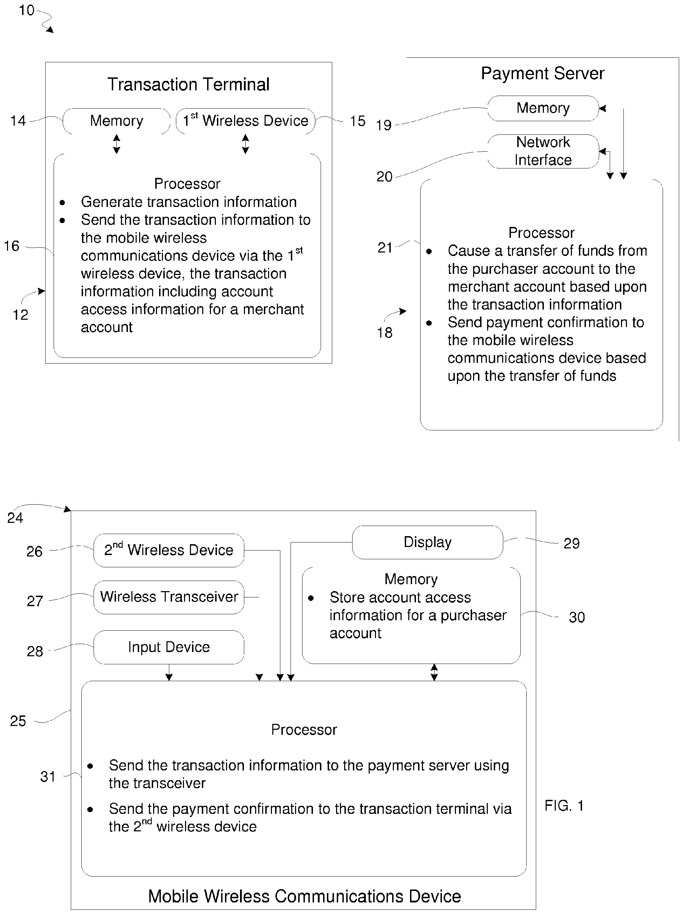

With reference to FIG. 1, an embodiment of a payment processing system **10** is now described. The payment processing system **10** includes a transaction terminal **12,** a payment server **18,** and a mobile wireless communications device **24.**

The transaction terminal **12** includes a processor **16** coupled to a memory **14** and a first wireless device **15.** The payment server **18** includes a processor **21** coupled to a memory **19** and a network interface **20.** The network interface **20** may provide the payment server **18** with connectivity to a wide area network, such as the Internet, through which the payment server can communicate with a credit clearing house or bank for effectuating transactions.

As will be explained in detail below, the first wireless device **15** may include a first near field communications (NFC) device. By way of background, NFC is a short-range wireless communications technology in which NFC-enabled devices are "swiped," "bumped" or otherwise moved in close proximity to communicate. In one nonlimiting example implementation, NFC may operate at 13.56 MHz and with an effective range of about 10cm, but other suitable versions of near-field communication which may have different operating frequencies, effective ranges, etc., for example, may also be used.

Example mobile wireless communications devices **24** may include portable or personal media players (e.g., music or MP3 players, video players, etc.), remote controls (e.g., television or stereo remotes, etc.), portable gaming devices, portable or mobile telephones, smartphones, tablet computers, etc. The mobile wireless communications device **24** includes a housing **25** carrying a second wireless device **26** (which may comprise a second NFC device), a wireless transceiver **27,** input device **28,** display **29,** memory **30,** and processor **31.** The processor **31** is coupled to the second wireless device **26,** wireless transceiver **27,** input device **28,** display **29,** and memory **30.**

The input device **28** may be a keyboard, touch sensitive pad, trackball, thumbwheel, button, microphone, or other suitable device, for example. It should be appreciated that in some applications, the display **29** may be a touch sensitive display, and may therefore serve as the input device **28.** In addition, the wireless transceiver **27** may be a cellular transceiver, and may be configured to perform both voice and data cellular communications.

The memory **30** may include volatile and nonvolatile portions, and is configured to store access information for a purchaser account associated with the mobile wireless communications device **24.** The purchaser account may be a credit card account, bank account, gift card account, or other suitable account.

The processor **16** of the transaction terminal **12** is configured to generate transaction information, and to send the transaction information to the mobile wireless communications device **25** via the first wireless device **15.** This transaction information may include information such as a transaction amount, and account access information for a merchant account associated with the transaction terminal **12.**

The mobile wireless communications device **24** receives the transaction information, adds account access information for a purchaser account stored in a memory **30** thereto, and sends the account access information to the payment server **18** using the wireless transceiver **27.** The payment server **18** in turn receives the account access information. The processor **21** of the payment server **18** then causes a transfer of funds from the purchaser account to the merchant account based upon the transaction information. The processor **21** sends a payment confirmation to the mobile wireless communications device **24** confirming that the funds have been successfully transferred. The mobile wireless communications device **24** receives the payment confirmation, and then the processor **31** thereof sends the payment confirmation to the transaction terminal **12** via the second wireless device **26.**

This payment processing system **10** has an advantage over prior art payment processing systems in that the transaction terminal **12** need not have a network interface for communication with the payment server **18.** This makes this payment processing system **10** particularly useful for mobile merchants or merchants with a small amount of space, such as vending machines, catering trucks, hot dog stands, pretzel stands, newsstands, vendors at fairs, etc. Additionally, the payment processing system **10** may provide cost savings compared to other payment processing systems, as connection to a wide area network (such as the Internet) is not necessary.

It should be appreciated that, in some applications, the processor **31** may prompt for entry of a password or authentication phrase via the input device **28** before sending the transaction information to the payment server. This may further increase security, and decrease the likelihood of unwanted transactions.

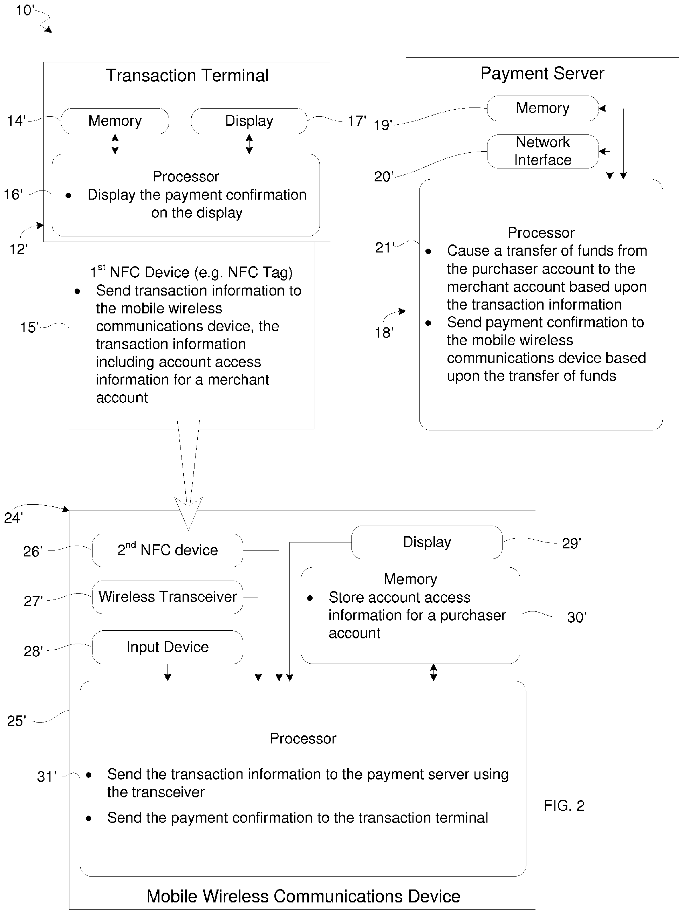

In some situations, the transaction terminal **14** may have a NFC tag. Such an embodiment is now described with reference to FIG. 2.

Here, the transaction terminal **12'** has a NFC tag **15'** associated therewith. The NFC tag **15'** includes the first NFC device, which sends the transaction information to the mobile wireless communications device **24'.** The transaction information may be sent when the NFC tag **15'** is in proximity with the mobile wireless communications device **24',** or when a swipe or bump gesture between the two is performed, for example.

In some applications, operation of the payment processing system **10'** may proceed as described above, but the mobile wireless communications device **24'** may send the transaction confirmation to the transaction terminal **12'** via a communication method other than NFC. Alternatively, the transaction terminal **12'** may include another NFC device (not shown), and the mobile wireless communications device **24'** may send the transaction confirmation to the transaction terminal via NFC communication. The processor **16'** of the transaction terminal **12'** displays the payment confirmation on the display **17'** thereof. This alerts a user of the transaction terminal **12'** that the transfer of funds has been completed. The payment confirmation may additionally or alternatively include a confirmation code which indicates that the transaction was genuine. For example, the confirmation code may be a pre-established word or phrase defined by the merchant, which would be unknown to the purchaser and the mobile wireless communications device **24',** thereby increasing the security of the system. The confirmation code may also be a rolling code or a time dependant code, in some applications.

It should be appreciated that the transaction terminal **12'** may have multiple NFC tags **15'** associated therewith, and that the transaction information may be generated by the processor **31'** of the mobile wireless communications device **24'** based upon NFC communications with these multiple NFC tags. For example, the transaction terminal **12'** may have a NFC tag associated therewith for each item that merchant sells, and a user of the mobile wireless communications device **24'** initiates NFC communications with each NFC tag representing an item he or she would like to purchase.

This allows a further simplification of the transaction terminal **12'** in that the processor **16'** thereof need not be configured to store prices of goods or services for sale, or to compute a total transaction cost. This may also help increase the speed of the transaction.

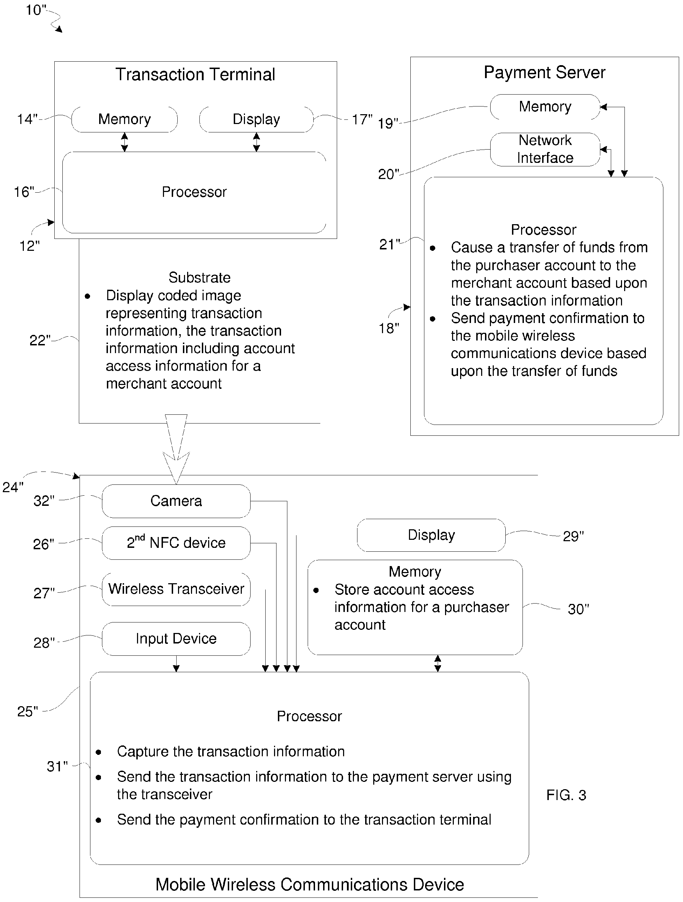

In some applications, the transaction terminal **10'** need not have an NFC tag **15'** associated therewith, but may instead have a substrate displaying an image associated therewith. An example embodiment including this feature is now described with reference to FIG. 3.

Here, the transaction terminal **12"** has a substrate **22",** such as a sticker or placard, associated therewith. The substrate **22** displays a coded image representing the transaction information. The coded image may be a barcode or QR code, for example, although it should be understood that any coded image would be suitable. Further, in some applications, the image need not be coded, and may instead be an uncoded image (e.g. a price or a product name).

The mobile wireless communications device **24"** includes an image sensor, such as a camera **32",** that captures the coded image displayed on the substrate **22".** The processor **31"** of the mobile wireless communications device **24"** may then decode the coded image to thereby determine the transaction information. In the case where an uncoded image is used, the processor **31"** may employ character or image recognition techniques known to those of skill in the art to determine the transaction information.

Operation of the payment processor system **10"** then proceeds as described above. It should be appreciated that like the embodiment of the payment processor system **10'** described above with reference to FIG. 2, the transaction terminal **12"** may have multiple substrates **22",** and the processor **31"** of the mobile wireless communications device **24"** may generate the transaction information based upon images of those substrates captured by the camera **32".**

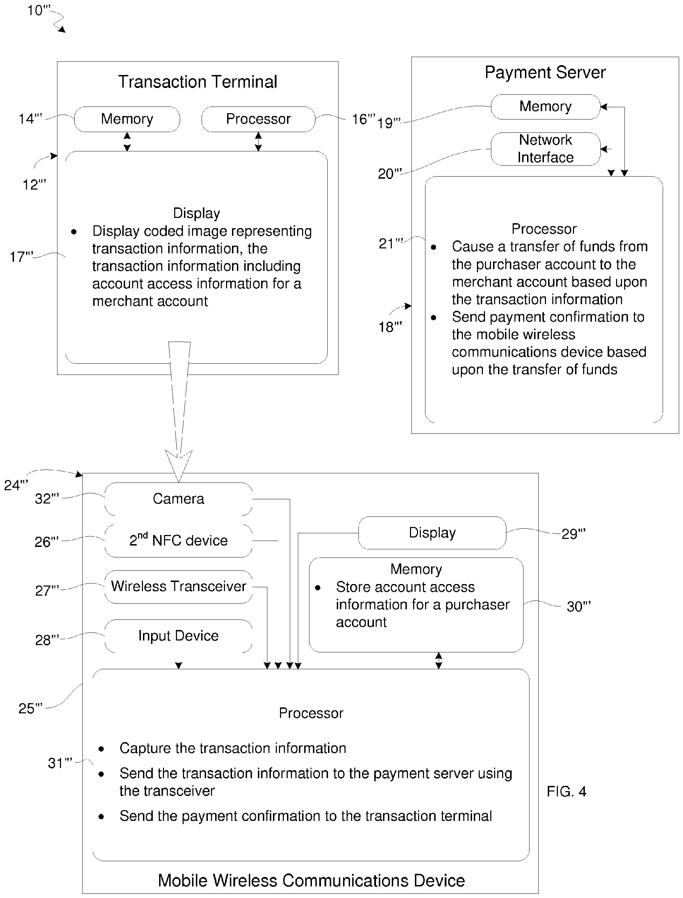

In some situations, the coded image may be displayed by the display **17"** of the transaction terminal **12"** and not by the substrate **22".** Such an embodiment is shown in FIG. 4. Here, the display **17"'** displays a coded image representing the transaction information, and the camera **32"'** of the mobile wireless communications device **24"'** captures the image, then determines the transaction information based thereupon. Operation of the payment processor system **10"'** then continues as described above.

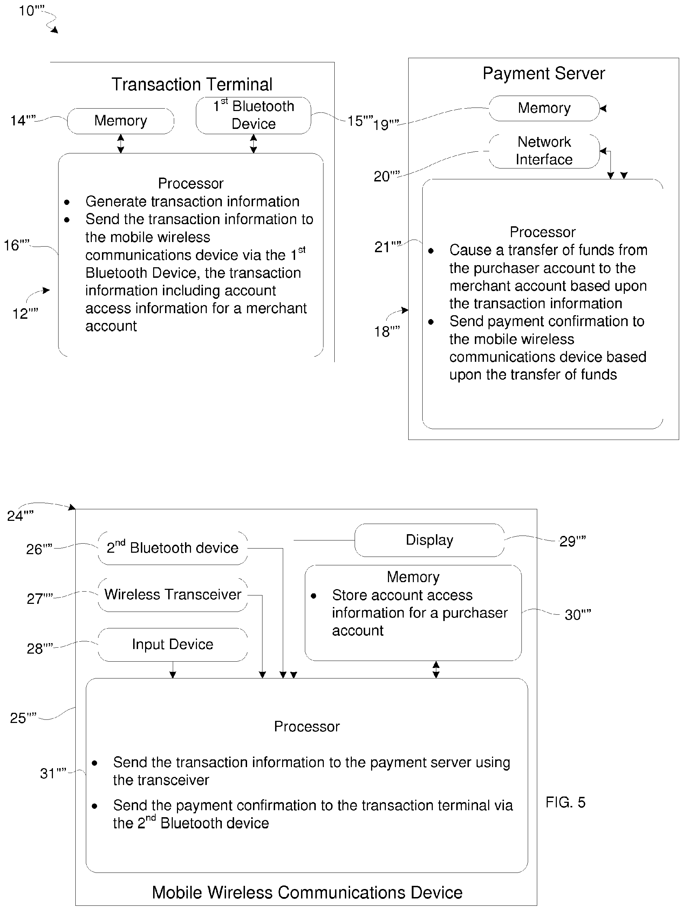

As will be understood by those skilled in the art, in some embodiments, there may be first and second Bluetooth devices **15"", 26"",** rather than first and second NFC devices, as shown in FIG. 5. Here, the transaction terminal **12""** and mobile wireless communications device **24""** communicate via Bluetooth. That is, the transaction terminal **12""** sends the transaction information to the mobile wireless communications device **24""** via the first Bluetooth device **15"",** and the mobile wireless communications device sends the payment confirmation back to the transaction terminal via the second Bluetooth device **26"".**

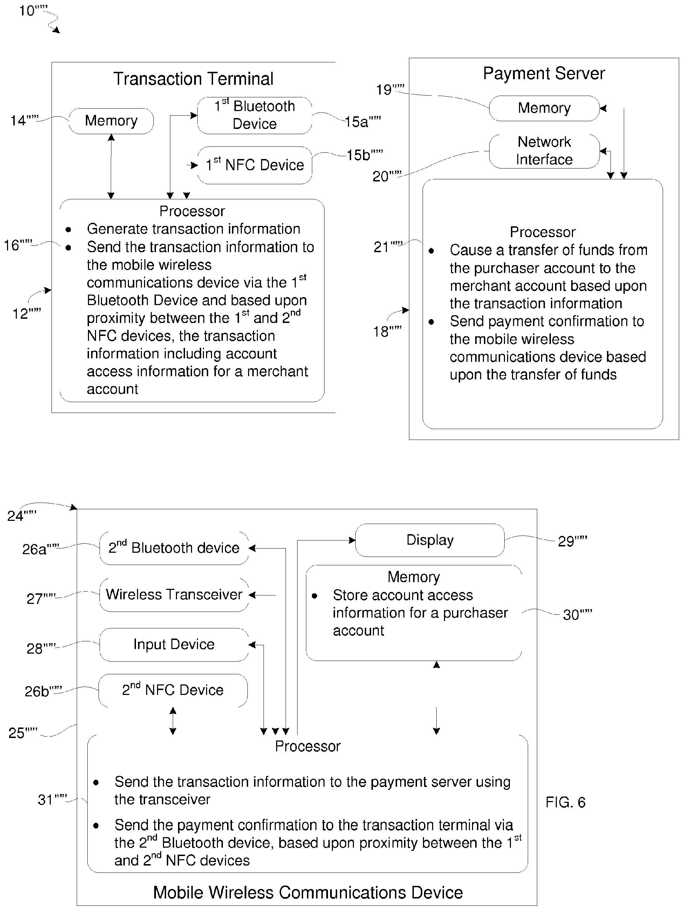

Of course, in some applications, there may be both first and second Bluetooth devices **15"", 26""** as well as first and second NFC devices. An example embodiment with these features is shown in FIG. 6. Here, the transaction terminal **12""'** include a first Bluetooth device **15a""'** and a first NFC device **15b""'.** Likewise, the mobile wireless communications device **24""'** includes a second Bluetooth device **26a""'** and a second NFC device **26b""'.** The transaction terminal **12""'** may send the transaction information to the mobile wireless communications device **24""'** via the first and second Bluetooth devices **15a""', 26a""'** based upon proximity between the first and second NFC devices **15b""', 26b""'.** It should be understood that the transaction information may be sent after the first and second NFC devices **15b""', 26b""'** are no longer in proximity, but had previously exchanged NFC communications, for example. In addition, the mobile wireless communications device **24""'** may send the payment confirmation to the transaction terminal **12""'** based via the first and second Bluetooth devices **15a""', 26a""'** based upon proximity between the first and second NFC devices **15b""', 26b""'.**

In some applications, the transaction terminal **12""'** may even send the transaction information to the mobile wireless communications device **24""'** via the first and second Bluetooth devices **15a""', 26a""',** over a Bluetooth communications channel established based upon a QR code detected via a camera, for example.

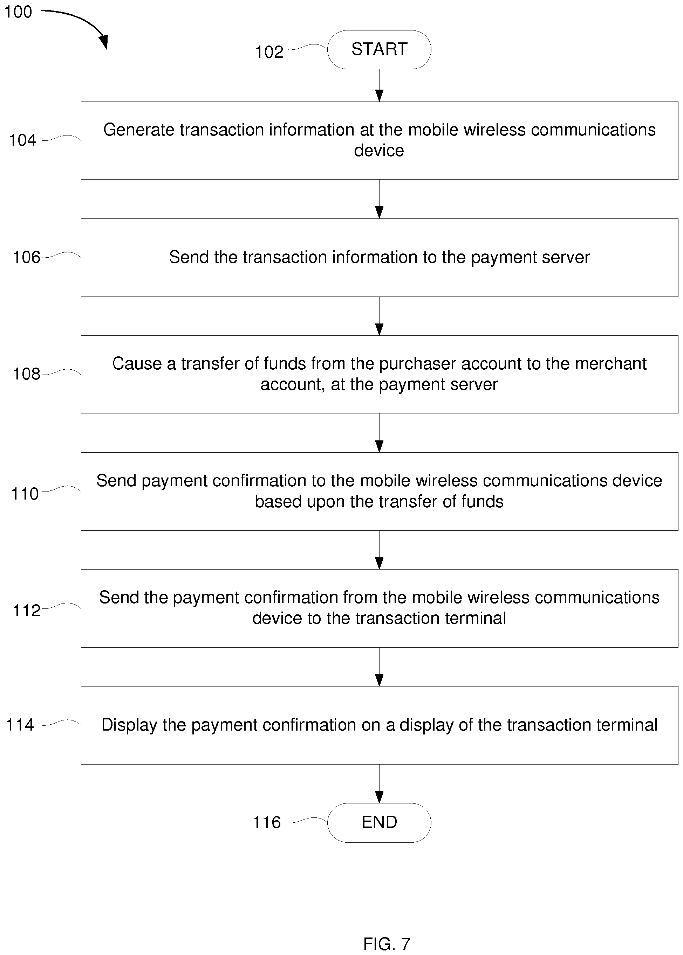

A method of operating the payment processing systems described above is now described with reference to the flowchart **100** of FIG. 7. After the start (Block **102**), transaction information is generated at the mobile wireless communications device (Block **104**). Then, the transaction information is sent to the payment server (Block **106**).

Next, the payment server causes a transfer of funds from the purchaser account to the merchant account (Block **108**). Thereafter, the payment server sends payment confirmation to the mobile wireless communications device based upon the transfer of funds (Block **110**).

The payment confirmation is then sent from the mobile wireless communications device to the transaction terminal (Block **112**). The payment confirmation is then displayed on the display of the transaction terminal (Block **114**). Block **116** indicates the end of the method.

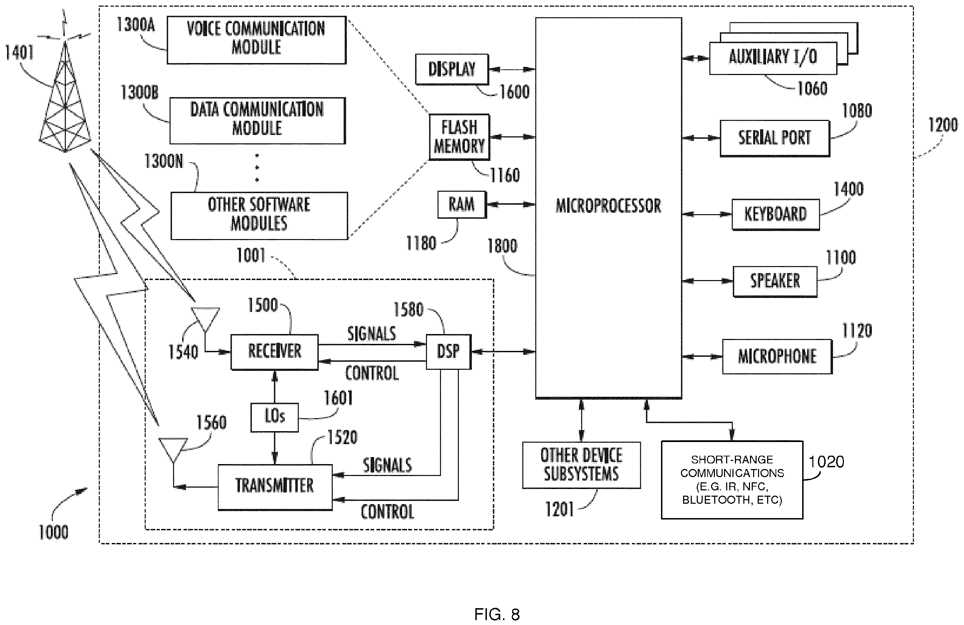

Example components of a mobile wireless communications device **1000** that may be used in accordance with the above-described embodiments are further described below with reference to FIG. 8. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 8. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

Aspects and features of the present disclosure are set out in the following numbered clauses which contain the subject matter of the claims of the parent application as filed.
Clause 1. A payment processing system **10** comprising:
   a transaction terminal **12** having a merchant account associated therewith and comprising a first wireless device **15;**
   a payment server **18;** and
   a mobile wireless communications device **24** having a purchaser account associated therewith and comprising a second wireless device **26** and a processor **31** coupled thereto and configured to send transaction information to said payment server **18;**
   said payment server **18** configured to cause a transfer of funds from the purchaser account to the merchant account based upon the transaction information, and to send payment confirmation to said mobile wireless communications device **24** based upon the transfer of funds;
   said processor **31** configured to send the payment confirmation to said transaction terminal **12** via said first and second wireless devices **15, 26.**
Clause 2. The payment processing system **10'** of clause 1, wherein said first and second wireless devices **15', 26'** comprise first and second near field communications (NFC) devices.
Clause 3. The payment processing system 10"" of clause 1, wherein said first and second wireless devices **15"", 26""** further comprise first and second Bluetooth devices.
Clause 4. The payment processing system **10""'** of clause 1, wherein said first wireless device **15""'** comprises a first near field communications (NFC) device **15b""'** and a first Bluetooth device **15a""';** wherein said second wireless device comprises **26""** a second NFC device **26b""'** and a second Bluetooth device **26a""';** wherein said transaction terminal **12""'** is configured to send the transaction information to said mobile wireless communications device **24""'** via said first and second Bluetooth devices **15a""', 26a""',** based upon proximity between said first and second NFC devices **15b""', 26b""';** and wherein said mobile wireless communications device **24""'** is configured to send the payment confirmation to said transaction terminal **12""'** via said first and second Bluetooth devices **15a""', 26a""',** based upon proximity between said first and second NFC devices **15b""', 26b""'.**
Clause 5. The payment processing system **10"'** of clause 1, wherein said transaction terminal **12"'** comprises a display **17"'** configured to display the transaction information; and wherein said mobile wireless communications device **24"'** comprises a camera **32"'** to capture the transaction information on said display **17"'.**
Clause 6. The payment processing system **10"** of clause 1, further comprising at least one substrate **22"** having an image thereon and positioned adjacent said transaction terminal **12";** wherein said mobile wireless communications device **24"** comprises a camera **32"** to capture the image; and wherein said processor **31"** is configured to generate the transaction information based upon the captured image.
Clause 7. The payment processing system **10'** of clause 1, further comprising at least one NFC tag **15'** having data stored thereon and positioned adjacent said transaction terminal **12';** and wherein said processor **31'** is configured to cooperate with said second NFC device **26'** and generate the transaction information based upon the stored data.
Clause 8. The payment processing system **10'** of clause 1, wherein said transaction terminal **12'** comprises a display **17'** and is configured to present the payment confirmation on said display.
Clause 9. A payment processing system **10'** comprising:
   a transaction terminal **12'** having a merchant account associated therewith and comprising a display **17'** and a first near field communications (NFC) device coupled thereto;
   at least one NFC tag **15'** having data stored thereon and positioned adjacent said transaction terminal **12';**
   a payment server **18';** and
   a mobile wireless communications device **24'** having a purchaser account associated therewith and comprising a second NFC device **26'** and a processor **31'** coupled thereto and configured to
      cooperate with said second NFC device **26'** to generate transaction information based upon the stored data, and
      send the transaction information to said payment server **18';**
   said payment server **18'** configured to cause a transfer of funds from the purchaser account to the merchant account based upon the transaction information, and to send payment confirmation to said mobile wireless communications device **24'** based upon the transfer of funds;
   said processor **31'** configured to send the payment confirmation to said transaction terminal **12';**
   said transaction terminal **12'** configured to present the payment confirmation on said display **17'** thereof.
Clause 10. The payment processing system **10'** of clause 9, wherein said transaction terminal further comprises a first Bluetooth device coupled to said display **17';** wherein said mobile wireless further comprises a second Bluetooth device coupled to said processor **31';** and wherein said processor **31'** is configured to send the payment confirmation to said transaction terminal via said first and second Bluetooth devices.
Clause 11. A method of operating a payment processing system **10** comprising a transaction terminal **12** having a merchant account associated therewith and comprising a first wireless device **15,** a payment server **18,** and a mobile wireless communications device **24** comprising a second wireless device **26** and having a purchaser account associated therewith, the method comprising:
   sending transaction information to the payment server **18** via cooperation between the first and second wireless devices **15, 26,** using a processor **31** of the mobile wireless communications device **24;**
   causing a transfer of funds from the purchaser account to the merchant account based upon the transaction information, and sending payment confirmation to the mobile wireless communications device **24** based upon the transfer of funds, using the payment server **18;** and
   sending the payment confirmation to the transaction terminal via cooperation between the first and second wireless devices **15, 26,** using the processor **31.**
Clause 12. The method of clause 11, wherein the first and second wireless devices **15""', 26""'** comprise first and second near field communications (NFC) devices **15b""', 26b""'.**
Clause 13. The method of clause 11, wherein the first and second wireless devices **15""', 26""'** further comprise first and second Bluetooth devices **15a""', 26a""'.**
Clause 14. The method of clause 11, wherein the first wireless device comprises **15""'** a first near field communications (NFC) device **15b""'** and a first Bluetooth device **15a""';** wherein the second wireless device **26""'** comprises a second NFC device **26b""'** and a second Bluetooth device **26a""';** wherein the transaction **12""'** sends the transaction information to the mobile wireless communications device **24""'** via the first and second Bluetooth devices **15a""', 26a""',** based upon proximity between the first and second NFC devices **15b""', 26b""';** and wherein the mobile wireless communications device **24""'** sends the payment confirmation to the transaction terminal **12""'** via the first and second Bluetooth devices **15a""', 26a""',** based upon proximity between the first and second NFC devices **15b""', 26b""'.**
Clause 15. The method of clause 11, further comprising sending the transaction information to the mobile wireless communications device **24""',** using the transaction terminal **12""'.**

## Claims

1. A payment processing system comprising
a remote payment server;
a transaction terminal, comprising a first Bluetooth communications device, the transaction terminal being associated with a merchant account,
a mobile wireless communications device, comprising a processor, a second Bluetooth communications device, and a cellular transceiver, the mobile wireless communications device being associated with a purchaser account, and arranged to communicate with the remote payment server via the cellular transceiver and a cellular network;
wherein the wireless mobile communications device is configured to receive transaction information from the payment terminal, the transaction information comprising account access information for a merchant account associated with the transaction terminal, the wireless mobile communications device being further configured to add account access information for the purchaser account to the transaction information, and to send the transaction information to the payment server via the cellular transceiver,
and wherein the payment server is configured to cause a transfer of funds from the purchaser account to the merchant account based upon the transaction information, and to send a payment confirmation based on the transfer of funds to the mobile wireless communications device via the cellular network;
the wireless mobile communications device being further arranged to send the payment confirmation to the transaction terminal via the first and second Bluetooth communications devices.

2. The payment processing device of claim 1, wherein the transaction terminal comprises no connection to a wide area network.

3. The payment processing terminal of claim 1 or claim 2, wherein the transaction information is received at the wireless mobile communications device via the first and second Bluetooth communications devices.

4. The payment processing device of claim 1 or claim 2, wherein the mobile wireless communications device comprises a camera, and the transaction terminal has an associated substrate displaying an image, wherein the camera is arranged to capture the image.

5. The payment processing device of claim 4 wherein the image is a QR code.

6. The payment processing device of claim 5, wherein transaction information is received at the payment terminal over a Bluetooth channel established based upon detection of the QR code by the camera.

7. The payment processing device of claim 4 or claim 5 wherein the processor is arranged to generate the transaction information based on the captured image.

8. The payment processing device of claim 4 or 5, wherein the image comprises the transaction information.

9. A method of operating a payment processing system comprising:
a transaction terminal being associated with a merchant account and comprising a first Bluetooth communications device,
a payment server, and
a mobile communications device, comprising a processor, a second Bluetooth communications device, a cellular transceiver, the mobile wireless communications device being associated with a purchaser account, and arranged to communicate with the remote payment server via the cellular transceiver and a cellular network; the method comprising:
receiving at the wireless mobile communications device transaction information from the payment terminal, the transaction information comprising account access information for a merchant account associated with the transaction terminal; adding account access information for the purchaser account to the transaction information, and sending the transaction information to the payment server via the cellular transceiver
causing a transfer of funds from the purchaser account to the merchant account based upon the transaction information,
sending a payment confirmation based on the transfer of funds from the payment server to the mobile wireless communications device via the cellular network; and
sending the payment confirmation from the wireless mobile communications device to the transaction terminal via the first and second Bluetooth communications devices.

10. The method of claim 9, wherein the transaction terminal comprises no connection to a wide area network.

11. The method of claim 9 or claim 10, further comprising received the transaction information at the wireless mobile communications device via the first and second Bluetooth communications devices.

12. The method of claim 9 or claim 10, wherein the mobile wireless communications device comprises a camera, and the transaction terminal has an associated substrate displaying an image, the method further comprising capturing the image with the camera.

13. The method of claim 12 wherein the image is a QR code.

14. The method of claim 13, further comprising receiving transaction information at the payment terminal over a Bluetooth channel established based upon detection of the QR code by the camera.

15. The method of claim 12 or claim 13 further comprising generating at the processor the transaction information, based on the captured image.
